# EUROPEAN PATENT APPLICATION

(11) **EP 3 162 665 A1**
(43) Date of publication of application: **03.05.2017**
(21) Application number: 15191525.3
(22) Date of filing: 26.10.2015
(51) Int. Cl.: B62D 15/02, G01D 5/14, B62D 53/08

(54) **MAGNETIC ANGULAR MEASURING SYSTEM FOR A FIFTH WHEEL JOINT WITH A KING PIN**

(71) Applicant: Alves Batista, Igor Augusto, 31155-710 Belo Horizonte - MG (BR)
(72) Inventor: Alves Batista, Igor Augusto, 31155-710 Belo Horizonte - MG (BR)
(74) Representative: BSB Intellectual Property Law

(57) **Abstract**

The present patent of invention, entitled "MAGNETIC ANGULAR MEASURING SYSTEM IN A MASTER PIN AND A FIFTH WHEEL JOINT", describes a magnetic angular measuring system in a master pin and fifth wheel joint which, according to its characteristics, provides an angular measuring system (1) in a suitable and specific electromechanical structure based on the angular detection of a master pin with magnetic devices (2) by magnetic principles sensors (4) installed in the fifth wheel (A) of vehicles with an articulated composition whose parts are joined by means of master pin and fifth wheel (A), which aims to allow in an extremely practical, safe and precise manner a full integration and optimization of the electronic sensing procedures for measuring the angle formed between vehicles of articulated compositions having this type of joint, regardless of the speed of the vehicle.

## Description

In general terms, the instant patent of invention refers to apparatuses for highway implements; more specifically it refers to a magnetic angular measuring system in a master pin and a fifth wheel joint whose basic principle, according to its general characteristics, is that of providing an angular measurement system angular in a suitable and specific electromechanical structure based on the angular detection of a master pin with a magnetic device by means of magnetic principle sensors installed in the fifth wheel of articulated vehicles, whose parts are joined by means of the master pin and the fifth wheel in order to allow), in order to allow in an extremely practical, safe and precise manner a full integration and optimization of the electronic sensing procedures for measuring the angle formed between vehicles of articulated compositions having this type of joint, regardless of the speed of the vehicle, and based on a highly resistant, safe and versatile angular measuring system. The system consists of a set of electromechanical solutions to improve users' adaptation and safety, to provide practical features for its handling and functionality, which are very affordable and which, due to their general characteristics and sizes, can be easily adapted to a wide range of trailers (truck - semitrailers), users and places in general, regardless of their characteristics.

Nowadays, the concern with transport safety has become increasingly evident, in both urban roads and highways, mainly for what concerns cargo vehicles. In view of this need for safety, the angular measurement between highway articulated vehicles has become an essential parameter for several apparatuses and systems for vehicle safety.

The Anti-lock Braking System (ABS) is present in most of articulated vehicles and it performs intelligent braking, preventing wheel lock-up in these vehicles. This system obtains the wheel lock-up through sensors installed in each wheel and, based on this data, an algorithm regulates the braking at each wheel individually. However, this solution disregards the data about the rotation between the vehicles of the composition, which, in extreme cases such as side sliding of a trailer- "L" effect, can be of vital importance for the functioning of the ABS.

In order to perform the angular measurement in a master pin and fifth wheel joint we must take into consideration factors about the place of the measurement, such as dirt and grease existing onsite, vital components to the vehicle with heavy load applied thereon, wherein all of them are normalized so that it is practically impossible to perform changes to the design. The best solution to comply with these conditions is that of using magnetism, which does not require contact between the fixed part and the rotating part and which is not affected by the dirt onsite.

In order to perform this angular measurement is crucial to use a master pin specific to the operation of this system. This solution is the subject of the application for patent of invention entitled "Master Pin with Magnetic Device", BR2020130172206, dated July 04, 2013. This product presents in its structure a magnetic mechanism that is to be detected by the sensors.

In this line of action, it has become essential for companies to use trailers - truck and semitrailers in general, as well as their drivers, structuring of a versatile, practical, safe and precise structure capable of measuring the rotation angle between the components of the trailers - truck and semitrailers, in order to facilitate the maneuvering procedures, primarily at low speeds and without the influences of the environment.

Through wide analysis of the literature with the purpose of establishing the current state of the art regarding magnetic angular measuring system in a master pin and fifth wheel joint subject of the present patent, documents relevant to the prior art have not been describe, we found no relevant prior art documents related to the specific subject claimed in the instant patent, that is, electronic sensing by means of magnetic sensors aiming at measuring the angle formed between vehicles of articulated compositions whose parts are jointed through a master pin and a fifth wheel.

Therefore, the general conception of the present magnetic angular measuring system in a master pin and fifth wheel joint, subject of the instant patent, is fully based on its simple and solid structuring with a required minimum of components and extremely simple, safe and optimized operability, combined with very practical manufacturing and maintenance procedures, so as to provide a practical and efficient angular measuring system capable of creating a data acquisition system, independent of the vehicle speed and other environmental influences, said system having the possibility of being easily inserted in articulated vehicles whose parts are joined by means of a master pin and fifth wheel, aiming to measure the angle formed between these vehicles through the algorithm.

The patent in question is characterized in that it gathers components and processes in a differentiated conception, which will meet the various requirements demanded by the nature of the use, that is, measuring the angle formed between vehicles of articulated compositions having this type of joint, independent of the vehicle speed. This conception ensures a very efficient, functional, resistant, durable, safe, versatile, economical, ergonomic and precise angular measuring system due to the combination of excellent technical qualities, which provides advantages and improvements in handling procedures of trails (trucks - semitrailers) in general and whose general characteristics differ from the other configurations and models known in the current state of the art.

The present patent involves the use of a modem, efficient, safe and functional magnetic angular measuring system in a master pin and fifth wheel joint, consisting of a set of properly combined electromechanical solutions, forming a complete and differentiated angular measuring system with an exclusive conception and suitable characteristics which is highly durable, reliable, resistant, and comprising the following elements, perfectly integrated and arranged between themselves: a magnetic master pin -as element for generating magnetic field intensity, an electronic circuit plate -as a control element of magnetic sensors, magnetic sensors -as elements for detecting the magnetic device of the magnetic master pin and for measuring magnetic field intensity, and a data processing electronic unit -as an element capable of measuring or estimating the angle between the vehicles of the articulated composition, in order to enable the formation of a complete and safe single set whose arrangement allows the perfect adaptation to a wide range of articulated compositions whose parts are joined by means of master pin and fifth wheel in general, being especially designed for these purposes.

The objectives, advantages and the other important characteristics of the patent in question may be more easily understood when read together with the attached figures, wherein::

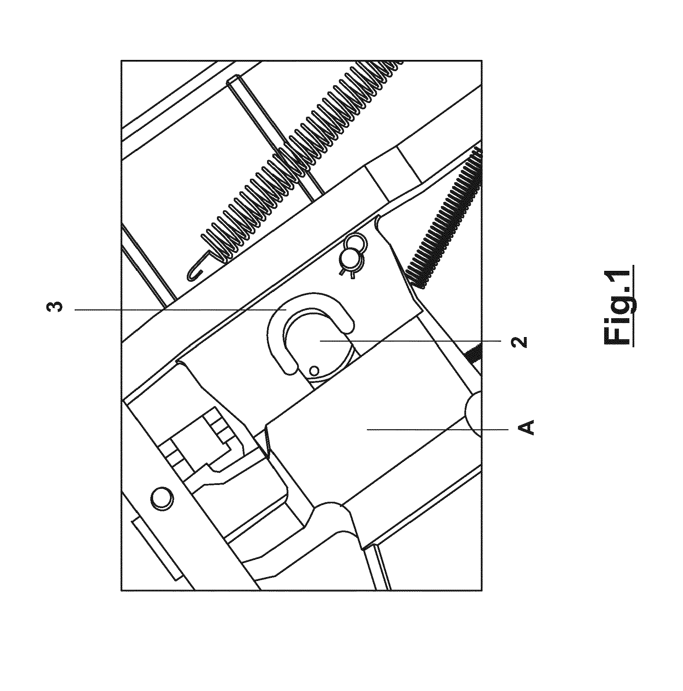

Figure 1 represents a bottom view of a fifth wheel where the magnetic angular measuring system in a master pin and fifth wheel is installed.

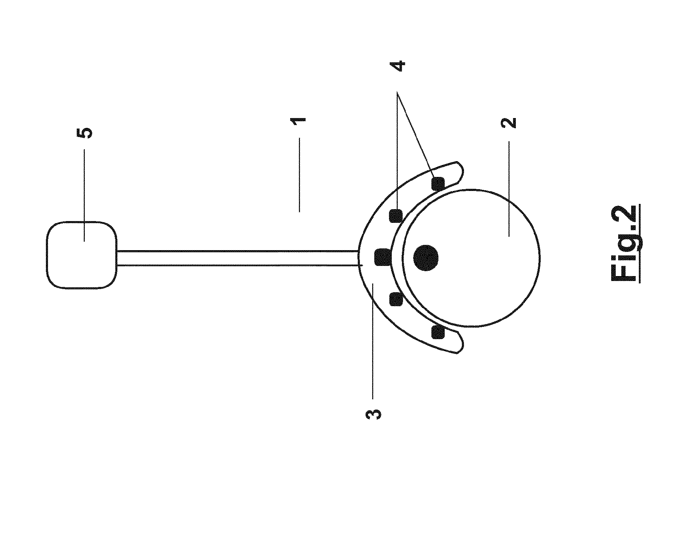

Figure 2 represents a schematic view of a magnetic angular measuring system in a master pin and fifth wheel joint.

As it can be inferred from the attached figures illustrating and integrating the present specification of the patent of invention entitled "Magnetic Angular Measuring System in a Master Pin and Fifth Wheel Joint", presenting a complete angular measuring system (1) and suitable characteristics, which incorporates a suitable and specific electromechanical structure of high durability, reliability and resistance, arrangement adaptable to a wide range of articulated compositions whose parts are joined by means of master pin and fifth wheel (A) in general, and containing the following elements, integrated and arranged between themselves: a magnetic master pin (2), a magnetic master pin with a magnet type magnetic device, engaged with the fifth wheel (A); an electronic circuit plate (3) arranged below and adjacent to the hole of the fifth wheel hole (A) and adjacent around the side extremities of the magnetic master pin (2); magnetic sensors (4) arranged on the electronic circuit plate (3); and a data processing unit (5) interconnected with the electronic circuit plate (3) which can interconnect with and supply any articulated vehicle electronic control system in need of information.

The magnetic angular measuring system in a master pin and fifth wheel joint, according to the application needs, consists of magnetic sensors (4) arranged in the electronic circuit plate (3) in single or multiple array, maintaining all the other characteristics inherent to the angular measuring system.

The magnetic angular measuring system in a master pin and fifth wheel joint, according to the application needs, consists of Hall Effect magnetic sensors (4) or a magnetometer with digital or analogic outlets, maintaining all the other characteristics inherent to the angular measuring system.

The functioning of the Hall Effect magnetic sensor (4) can be digital or analogical. In the digital form, the magnetic sensor (4) works as a key and when it detects a magnetic field intensity with a determined value, produces a constant output voltage value, equivalent to a value "one" and, when the field intensity is lower than this value, the output voltage of the magnetic sensor (4) is reduced to the equivalent of the value "zero" of the digital system. In the analogic form, the produced voltage is proportional to the magnetic field intensity, which is directly proportional to the distance between the magnetic device of the magnetic master pin (2) and the magnetic sensor (4).

When engaged, the magnetic master pin (2) rotates on its vertical axis with respect to the fifth wheel (A) and, depending on its angular position, it will increase or decrease the magnetic field intensity measured by the magnetic sensors (4), due to the distance between them. Accordingly, if the magnetic sensor (4) is working analogically, the output signal thereof will be directly bond to the angular position of the magnet of the magnetic master pin (2) and, in turn, it will be directly proportional to the angle between the vehicles; if the magnetic sensor (4) is working digitally, more than one of them must be installed in the electronic circuit plate (3), since these are placed in strategic positions which will detect only whether the magnetic master pin device (2) is or is not present in that determined position and, thus, it will read the angle in a punctual rather than a continuous way.

Accordingly, the output data of the magnetic sensors (4) sent to an electronic unit (5) with an algorithm for this calculation, allow measuring the angles between the vehicles of the articulated composition. Thus, this electronic unit (5) will be able to distribute this data to any other system that needs or may need this data to operate.

More specifically, the angular measuring system is based on a magnetic master pin (2) (master pin with magnetic device) detected by magnetic sensors (4) installed in the fifth wheel (A). Accordingly, upon rotation of the magnetic master pin (2) on its vertical axis, the angular position of the magnetic device (magnet) of the magnetic master pin (2) will change and so will the reading of each magnetic sensor (4). According to the functioning principles of magnetic sensors (4), through the algorithm and regardless of the articulated vehicle speed, it is possible to measure the articulated vehicle speed, the angle formed between the vehicles of an articulated composition whose parts are joined by means of master pin and fifth wheel (A).

The magnetic angular measuring system in a master pin and fifth wheel joint achieves a high performance and efficiency rate coupled with high durability and complete safety since its components are fully integrated. After they are integrated, the components are fully available for the procedures of measuring the angle formed between the vehicles of articulated compositions whose parts are joined by means of master pin and fifth wheel (A), regardless of the vehicle speed. Hence, the angular measuring system (1) can be used without concern of any nature, especially on the durability and safety of its components, as well as on its users' the safety.

In view of the foregoing, this invention relates to a measuring system which will be well-received by cargo transportation companies and their drivers in general, given that the magnetic angular measuring system in a master pin and fifth wheel joint presents several advantages and applications, such as: great safety, reliability, precision and productivity; great yield and performance due to its general conception; great comfort, convenience and safety for users; fully accessible costs, resulting in an excellent cost/benefit ratio; practical and safe use by the most diverse users; wide range; low and practical general maintenance; perfect and direct adaptation to the most diverse type of articulated vehicles; high mobility and flexibility of the set; high operational ergonomics; excellent operational precision; and certainty to have an angular measuring system (1) fully compliant with the law and the regulations in force and with the basic conditions required for its application.

All these attributes allow classifying the magnetic angular measuring system in a master pin and fifth wheel joint as a completely versatile, efficient, practical and safe to be applied directly in coupling a wide range of trailers (truck - semitrailers) in general, regardless of the general characteristics that these may present; it also presents ease of application and handling, combined with a great performance and excellent general characteristics; however the measures, sizes and quantities may vary according to the needs of each application.

## Claims

1. A "MAGNETIC ANGULAR MEASURING SYSTEM IN A MASTER PIN AND A FIFTH WHEEL JOINT" **characterized in that** it consists of a angular measuring system (1) which incorporates a structure containing the following elements integrated and arranged between themselves: magnetic master pin (2), master pin with magnet type magnetic device, engaged with the fifth wheel (A); an electronic circuit plate (3) arranged below and adjacent to the hole of the fifth wheel (A) and adjacent around the side extremities of the magnetic master pin (2); magnetic sensors (4) arranged on the electronic circuit plate (3); and an electronic data processing unit (5) interconnected with the electronic circuit plate (3), which can interconnect with and supply any articulated vehicle electronic control system in need of information.

2. The "MAGNETIC ANGULAR MEASURING SYSTEM IN A MASTER PIN AND A FIFTH WHEEL JOINT", according to claim 1, **characterized in that** it comprises magnetic sensors (4) arranged on the electronic circuit plate (3) in a single or multiple array, maintaining all the other characteristics inherent to the angular measuring system.

3. The "MAGNETIC ANGULAR MEASURING SYSTEM IN A MASTER PIN AND A FIFTH WHEEL JOINT", according to claims 1 and 2, **characterized in that** it comprises Hall Effect magnetic sensors (4) or a magnetometer with digital or analogic outlets, maintaining all the other characteristics inherent to the angular measuring system.
